# EUROPEAN PATENT APPLICATION

(11) **EP 4 701 178 A1**
(43) Date of publication of application: **25.02.2026**
(21) Application number: 25197348.3
(22) Date of filing: 21.08.2025
(51) Int. Cl.: H04N 7/18, G08B 13/196, G08B 29/18, H02J 9/04, H04N 23/65

(54) **INTELLIGENT POWER FAIL SAFE**

(30) Priority: 21.08.2024 US 202463685548 P
(71) Applicant: Tyco Fire & Security GmbH, 8212 Neuhausen am Rheinfall (CH)
(72) Inventor: IRVINE, Christopher Raymond, Craigavon (GB); MARSHALL, George, Milwaukee , Wisconsin (US); NEILL, Terence, Lisburn (GB)
(74) Representative: Meissner Bolte Nürnberg

(57) **Abstract**

Example implementations include a method, apparatus and computer-readable medium for intelligent power fail-safe of a network video surveillance camera, comprising detecting a loss in external power from an external power supply to the network video surveillance camera. The implementations further include powering the network video surveillance camera with an internal power supply in response to detecting the loss in external power from the external power supply.

## Description

This patent application claims the benefit of U.S. Provisional Application No. 63/685,548, filed on August 21, 2024, titled "INTELLIGENT POWER FAIL SAFE." The disclosure of the prior application is hereby incorporated by reference in its entirety.

The described aspects relate to power control systems for network connected cameras.

Aspects of the present disclosure relate generally to power supply systems for surveillance technology, and more particularly, to internal power systems for surveillance equipment.

Network connected video surveillance systems often include cameras that are used to surveil areas of interest in public or private spaces. These systems can include one or more video cameras that are fixed in a static location, for example, to an exterior or interior wall of a building, a roof, a pole, or other locations. Surveillance cameras are generally connected via wired connection to and powered by external energy sources that provide continual power to the cameras in order to maintain network connection and perform surveillance tasks. Loss of an external energy source can result in loss of operation, including loss of valuable information, and may result in undesirable security breaches. External power sources that transfer power across long power transmission mediums to a camera can falter due to power outages, power surges, transmission cables being damaged or cut, and other power impacting events. In many cases these power faults may not cause any damage or failures to the internal components of the camera, but will otherwise interrupt normal camera operation.

Embodiments according to the invention are disclosed in particular in the appended claims. The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

The systems, methods, and apparatuses described herein and their various aspects can mitigate and even prevent the effects of power interruption events caused by natural, accidental, and even malicious physical attacks on video surveillance systems and other surveillance equipment. Implementations in accordance with the aspects disclosed herein include static or fixed surveillance equipment including cameras fixed to buildings. Other implementations are also contemplated, including dashcams for vehicles, webcams, and others.

In various aspects, a camera system can include one or more internal power sources, which can be included within and/or near camera hardware such as a camera housing. Examples of internal power sources include one or more of power storage components such as batteries and power generation components such as solar panels, wind power generators, hydroelectric, electrochemical, and/or other power generation components. In some aspects, one or more external power sources can charge one or more internal power sources such as a battery through one or more electrical couplings, in addition to providing direct or indirect power to necessary hardware of the system. In various aspects, when an external power loss event occurs, the one or more internal power sources are operable to instantaneously or nearly instantaneously activate and operate to ensure minimal or no loss of power to other camera systems and/or subsystems. This activation and operation can mitigate or prevent loss of power to one or more camera systems and/or subsystems due to automatic, semiautomatic, or manual shut-down, reboot, or other actions that may otherwise result in loss of normal operation of the camera system. Internal power sources can thereby mitigate damage or negative or detrimental consequences caused by external power loss unless and/or until the internal power source depletes or the external power source returns to a normal operating condition.

In some aspects, when an external power loss event occurs and/or is detected and an internal power source is engaged, activated, or otherwise becomes operational, a coupled camera system can enter a power saving mode, a video saving mode, a modified data storage mode, and/or other secondary, emergency, and/or backup modes of operation. These secondary, emergency, and/or backup modes of operation can disengage, deactivate, and/or otherwise prevent the operation of non-critical and/or otherwise superfluous processes. Additionally or alternatively, secondary, emergency, and/or backup modes of operation can be engaged and/or disengaged to preserve power necessary or required for key camera system processes and/or to prevent data loss. Examples of secondary, emergency, and/or backup modes of operation functions that can be engaged and/or disengaged can include one or more of: reducing audio and/or video stream resolution including reducing frames per second captured, stored, and/or transmitted; recording audio and/or video streams and/or footage to memory (e.g., wired or low-power nearby wireless storage such as Secure Digital (SD) cards or others); turning off one or more hardware components and/or systems or subsystems with relatively high power draw (e.g., disengaging high wattage hardware such as infrared light emitting diodes (IR LEDs) or wireless communication amplifiers); and others. Further, in some aspects depending on available communication channels via wireless and/or wired protocols, one or more alerts, alarms, and/or notifications can be sent to machine systems and/or humans regarding the external power source event resulting in the interruption, loss and/or disconnection of external power to the camera system.

An example aspect includes a method for intelligent power fail-safe of a network video surveillance camera, comprising detecting a loss in external power from an external power supply to the network video surveillance camera. The method further includes powering the network video surveillance camera with an internal power supply in response to detecting the loss in external power from the external power supply.

Another example aspect includes an apparatus for intelligent power fail-safe of a network video surveillance camera, comprising one or more memories and one or more processors coupled with one or more memories and configured to perform, individually or in any combination, the following actions. The one or more processors are configured to detect a loss in external power from an external power supply to the network video surveillance camera. The one or more processors are further configured to power the network video surveillance camera with an internal power supply in response to detecting the loss in external power from the external power supply.

Another example aspect includes an apparatus for intelligent power fail-safe of a network video surveillance camera, comprising means for detecting a loss in external power from an external power supply to the network video surveillance camera. The apparatus further includes means for powering the network video surveillance camera with an internal power supply in response to detecting the loss in external power from the external power supply.

Another example aspect includes a computer-readable medium having instructions stored thereon for intelligent power fail-safe of a network video surveillance camera, wherein the instructions are executable by one or more processors to detect a loss in external power from an external power supply to the network video surveillance camera. The instructions are further executable to power the network video surveillance camera with an internal power supply in response to detecting the loss in external power from the external power supply.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

The disclosed aspects will hereinafter be described in conjunction with the appended drawings, provided to illustrate and not to limit the disclosed aspects, wherein like designations denote like elements, wherein dashed lines may indicate optional elements, and in which:
Fig. 1 is a diagram of a surveillance system with an internal power system, in accordance with various aspects of the present disclosure;
Fig. 2 is a diagram of a surveillance system with an external power interruption, in accordance with various aspects of the present disclosure;
Fig. 3 is a block diagram of an example of an internal power system having components configured to perform a method for intelligent power fail-safe of a network video surveillance camera, in accordance with various aspects of the present disclosure;
Fig. 4 is a flowchart of an example of a method for intelligent power fail-safe of a network video surveillance camera, in accordance with various aspects of the present disclosure;
Fig. 5 is a flowchart of additional aspects of the method of Fig. 4, in accordance with various aspects of the present disclosure;
Fig. 6 is a flowchart of additional aspects of the method of Fig. 4, in accordance with various aspects of the present disclosure;
Fig. 7 is a flowchart of additional aspects of the method of Fig. 4, in accordance with various aspects of the present disclosure;
Fig. 8 is a flowchart of additional aspects of the method of Fig. 4, in accordance with various aspects of the present disclosure;
Fig. 9 is a flowchart of additional aspects of the method of Fig. 4, in accordance with various aspects of the present disclosure; and
Fig. 10 is a flowchart of additional aspects of the method of Fig. 4, in accordance with various aspects of the present disclosure.

Various aspects are now described with reference to the drawings. In the following description, for purposes of explanation, numerous specific details are set forth in order to provide a thorough understanding of one or more aspects. It may be evident, however, that such aspect(s) may be practiced without these specific details.

According to the various aspects described herein, smart or intelligent surveillance camera devices, apparatuses, and/or systems are described that include low-power mode(s) that are activated or engaged when power from an external power source to the surveillance camera systems is interrupted. Accordingly, included are an internal power source that is able to switch from a standard operating mode to one or more secondary, backup and/or emergency mode(s) and which is able to reduce power demands of the surveillance camera system(s) to add or extend operational longevity during external power interruptions and maintain key surveillance features. Internal power systems can be located internal to the camera so that they are tamper-resistant or tamper proof because they do not include external components that are obviously visible and that might be tampered with by bad actors. For example, if power from an external power system is interrupted due to an exposed power cord being cut by a malicious actor, the malicious actor may not realize that the surveillance camera is still operational and functioning based on the internal power system. Therefore, the surveillance camera system(s) can continue recording video despite having lost their external power source. In some aspects, network surveillance cameras can be implemented individually or as part of subsystems or systems of surveillance, for example in or at one or more data centers, public or private secure or controlled access locations, or other facilities.

In various aspects, network surveillance cameras can include networking components on or in the camera. In a standard operating mode, power is generally provided by an external power system and may be lost for one of any number of reasons including power outage due to natural or man-made causes, malicious events (e.g., a bad actor trying to or successfully tampering with the camera), and/or other internal and/or external causes. In instances where problems are not due to internal component failure and where the surveillance camera would otherwise work with a functional power source, these low power modes can allow the camera to continue functioning by recording and storing the recording in a local and/or remote (e.g., via wireless transmission) computer readable storage medium.

According to various aspects it would be desirable to avoid or prevent a dip or reduction in power to ensure operability of a surveillance camera by maintaining functionality of the camera and preventing the surveillance camera from entering a reboot cycle. This can be accomplished by a continuously monitored switchover system whereby the camera enters a lower power mode (as compared with a standard power mode) and which is a power saving state. Non-essential functions can be curtailed and a reduction in stream resolution can maintain one or more surveillance operations for a lengthy period without externally provided power.

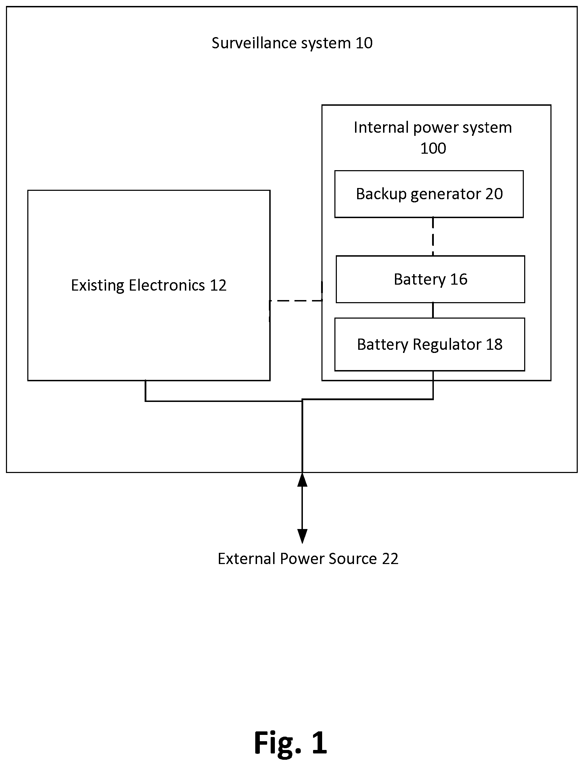

Referring to Fig. 1, a diagram of a surveillance system 10 with an internal power system 100 is shown. Surveillance system 10 can include existing electronics 12. Examples of existing electronics 12 can include one or more processor(s), one or more memory/memories, optical component(s), audio component(s), communication component(s), orienting component(s), indicator(s) (e.g., LEDs) and/or display(s) (e.g., user interface screen), and power management component(s).

Optical component(s) can include a still and/or video camera that is operable and configured to capture one or more images or videos via one or more lens(es), aperture(s), mirror(s), sensor(s), prism(s) screen(s), meter(s), shutter(s), focusing element(s), zoom element(s), filter(s), and/or other components. Audio component(s) can include one or more microphone(s), amplifier(s), noise reducer(s), filter(s), or others.

Communication component(s) can include wireless transmitter(s), wireless receiver(s), wireless transceiver(s), networking component(s), signal booster(s), communications cable(s), or others.

Orienting component(s) can include one or more motor(s) that are operable to move the surveillance system in the physical space and direct the surveillance system in a selected direction and/or toward a selected location for surveillance tasks. For example, one or more motor(s) can direct the surveillance system up or down and/or side to side in order to surveil locations within the monitoring capabilities of the surveillance system.

Power management component(s) can include regulator(s), distributor(s), or others.

Although not shown in FIG. 1, in should be understood that various physical components of a surveillance system can hold and/or protect the system and can include housing(s), mounting(s), and others as necessary and appropriate.

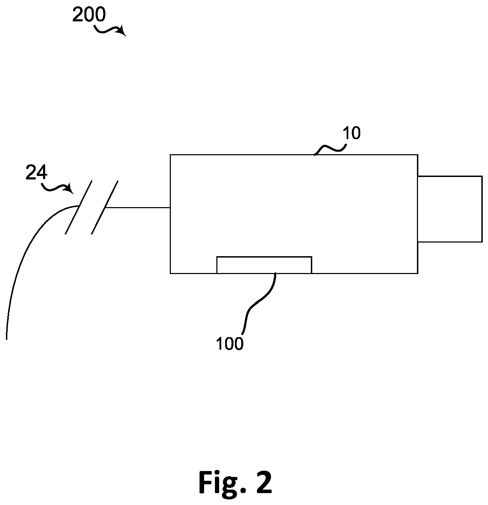

Referring to Fig. 2, a diagram 200 is shown of a surveillance system 10 with an external power interruption 24. Due to the external power interruption 24, an internal power system 100 can provide power and maintain operation of surveillance system 10 in a normal and/or modified manner.

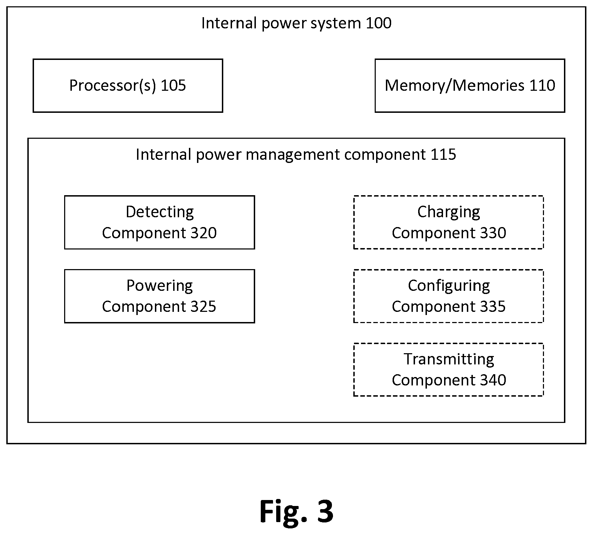

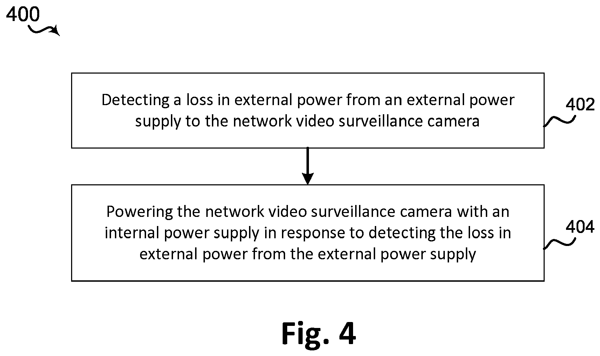

Referring to Fig. 3 and Fig. 4, in operation, internal power system 100 may perform a method 400 for intelligent power fail-safe of a network video surveillance camera, such as via execution of one or more operations of internal power management component 115 by one or more processors 105 configured, individually or in any combination, to execute instructions to perform the following actions, and/or configured to communicate with one or more memories 110 to obtain the instructions.

At block 402, the method 400 includes detecting a loss in external power from an external power supply to the network video surveillance camera. For example, in an aspect, internal power system 100, one or more processors 105, one or more memories 110, internal power management component 115, and/or detecting component 320 may be configured to or may comprise means for detecting a loss in external power from an external power supply to the network video surveillance camera.

Detecting at block 402 may include the internal power management component 115 detecting, via detecting component 320, an interruption in external power to the network video surveillance camera. Detecting component 320 can include one or more voltage sensors electrically coupled with a main power line of the network video surveillance camera and can be operable to detect a loss in external power by detecting a change in voltage such as a voltage loss, sag, or dip, which can be based on a voltage level drop for a specific period of time (e.g., based on cycles, fractions of a second, seconds, or minutes). These periods of time can be momentary, temporary, or sustained based on the time period that the change or interruption in power occurs. Detecting component 320 can also be operable to detect a loss in external power by detecting a voltage spike, which can be a rapid variation in voltage that lasts for a period of time (e.g., fractions of a second, seconds, or minutes). Voltage spikes can be relatively minor in some cases or can be voltage variations of orders of magnitude over a normal operating voltage. In various aspects a voltage condition measured by detecting component 320 can be compared with one or more preset or selected voltage thresholds and, based on a length of time (i.e., duration) determined according to a timer, can trigger internal power management component 115 to enter a secondary, emergency, and/or backup modes of operation. In some aspects detecting can include processor(s) 105 actively polling internal power management component 115.

Based on a determination by detecting component 320 of internal power management component 115 that external power has been suspended, reduced, lost, or eliminated, processor(s) 105 can execute one or more algorithms stored in memory/memories 110 that initiate or otherwise engage or activate internal power system 100 to provide power to the network video surveillance camera in order to prevent data loss and maintain routine and normal or secondary, emergency, and/or backup modes of operation of the network video surveillance camera.

Further, for example, the detecting at block 402 may be performed to ensure that one or more surveillance tasks, processes, and/or operations of the network video surveillance camera are able to continue functioning in a normal or reduced capacity.

At block 404, the method 400 includes powering the network video surveillance camera with an internal power supply in response to detecting the loss in external power from the external power supply. For example, in an aspect, internal power system 100, one or more processors 105, one or more memories 110, internal power management component 115, and/or powering component 325 may be configured to or may comprise means for powering the network video surveillance camera with an internal power supply in response to detecting the loss in external power from the external power supply.

For example, the powering at block 404 may include initiating, activating, or engaging a powering component 325 (e.g., a battery and/or backup power generator such as a solar panel or other power generation component or system) to supply power to the network video surveillance camera.

Further, for example, the powering at block 404 may be performed in order to ensure that surveillance actions or activities are able to continue and that surveillance data recorded or captured by the network video surveillance camera is not lost.

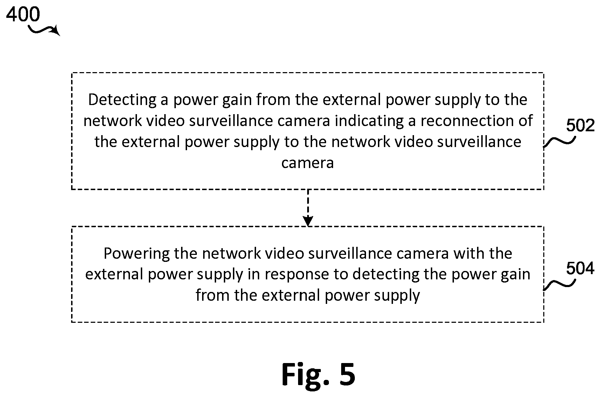

Referring to Fig. 5, in an alternative or additional aspect, at block 502, the method 400 may further include detecting a power gain from the external power supply to the network video surveillance camera indicating a reconnection of the external power supply to the network video surveillance camera after a previous disconnection. For example, in an aspect, internal power system 100, one or more processors 105, one or more memories 110, internal power management component 115, and/or detecting component 320 may be configured to or may comprise means for detecting a power gain from the external power supply to the network video surveillance camera indicating a reconnection of the external power supply to the network video surveillance camera after a previous disconnection.

For example, the detecting at block 502 may include detecting component 320 detecting a voltage condition such as a voltage increase and/or stabilization to a standard and/or normal level for a sustained selected or preset period of time. In various aspects a voltage condition measured by detecting component 320 can be compared with one or more preset or selected voltage thresholds and, based on a length of time determined according to a timer, can trigger internal power management component 115 to cease operation of a secondary, emergency, and/or backup modes of operation of internal power system 100. In some aspects detecting can include processor(s) 105 actively polling internal power management component 115.

Further, for example, the detecting at block 502 may be performed in order to allow for internal power system 100 to disengage, deactivate, or relinquish power providing operations for the network video surveillance camera and for the network video surveillance camera to return to a standard or normal operating mode or condition. This can also allow for a powering component 325 to be charged via the external power supply or otherwise in order to be able to provide backup power in the event of a future external power interruption.

In this optional aspect, at block 504, the method 400 may further include powering the network video surveillance camera with the external power supply in response to detecting the power gain from the external power supply. For example, in an aspect, internal power system 100, one or more processors 105, one or more memories 110, internal power management component 115, and/or powering component 325 may be configured to or may comprise means for powering the network video surveillance camera with the external power supply in response to detecting the power gain from the external power supply.

For example, the powering at block 504 may include disengaging, deactivating, or relinquishing power providing operations to the network video surveillance camera.

Further, for example, the powering at block 504 may be performed to preserve internal power for future external power interruptions, to allow for a full operational mode of the network video surveillance camera to return, to allow for communication that was deactivated or disengaged due to the network video surveillance camera entering a secondary, emergency, and/or backup modes of operation, or other conditions or functions to return.

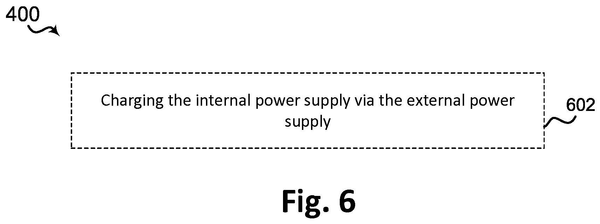

Referring to Fig. 6, in an alternative or additional aspect, at block 602, the method 400 may further include charging the internal power supply via the external power supply. For example, in an aspect, internal power system 100, one or more processors 105, one or more memories 110, internal power management component 115, and/or charging component 330 may be configured to or may comprise means for charging the internal power supply via the external power supply.

For example, the charging at block 602 may include the internal power management component 115 drawing power from the external power source via an electrical coupling to powering component 325. One or more regulation components can be included to ensure that powering component 325 receives an adequate and/or appropriate amount of power and that charging of powering component 325 occurs at appropriate levels and stops at an appropriate time. One or more sensors can be included in detecting component 320 to aid in this process, such as a temperature sensor to ensure that powering component 325 does not overheat during a charging operation. In some aspects, an algorithm stored in memory/memories 110 and employed to automate charging and discharging (i.e., cycling) of power component 325 to improve the longevity of power component 325.

Further, for example, the charging at block 602 may be performed in order to ensure that power component 325 is near or at full capacity if and when an interruption in power from the external power supply occurs in the future, so that stored power will be available to maintain or provide one or more surveillance operations.

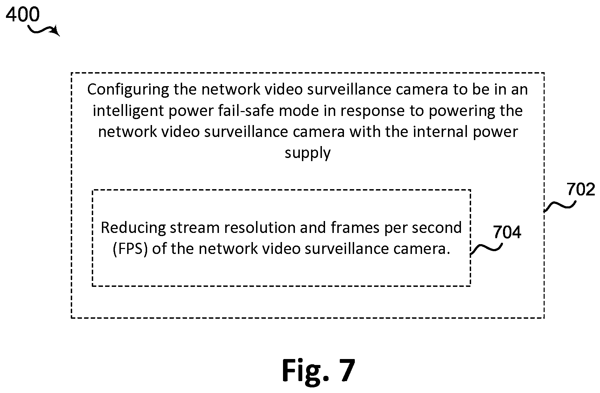

Referring to Fig. 7, in an alternative or additional aspect, at block 702, the method 400 may further include configuring the network video surveillance camera to be in an intelligent power fail-safe mode in response to powering the network video surveillance camera with the internal power supply. For example, in an aspect, internal power system 100, one or more processors 105, one or more memories 110, internal power management component 115, and/or configuring component 335 may be configured to or may comprise means for configuring the network video surveillance camera to be in an intelligent power fail-safe mode in response to powering the network video surveillance camera with the internal power supply.

For example, the configuring at block 702 may include one or more algorithms stored in memory/memories 110 that when executed by the one or more processors 105 functions to manage the intelligent power fail-safe mode. This intelligent power fail-safe mode can ensure that when internal power management component 115 determines a possible power interruption from the external power source, that the internal power system 100 can reduce or eliminate non-essential functions in order to minimize potential data loss, down time, reset complications, and/or component damage. One or more preset or selected thresholds can be employed in order to manage this process.

Further, for example, the configuring at block 702 may be performed in order to ensure one or more surveillance tasks may continue if and when power from the external power source is suspended, reduced, lost, or eliminated due to a fault or other power interruption event.

In this optional aspect, at block 704, the configuring at block 702 of the network video surveillance camera to be in the intelligent power fail-safe mode further comprises reducing stream resolution and frames per second (FPS) of the network video surveillance camera.

For example, processor(s) 105 of internal power system 100 can communicate with one or more controllers and/or other processors of the network video surveillance camera to indicate that the external power source is subject to an event causing a disruption or interruption to external power. Based on one or more signals, instructions, and/or algorithms, components and/or functions of network video surveillance camera can be reduced according to one or more operating modes stored in memory and having one or more operating mode conditions. This can be performed in order to ensure internal power is not wasted on non-essential tasks or processes and thereby to extend operations until external power can be restored. Reducing stream resolution and/or FPS can have one or more modes and/or levels of operation based on one or more thresholds.

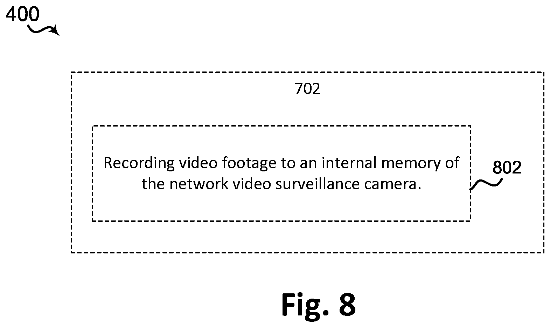

Referring to Fig. 8, in an alternative or additional aspect, at block 802, the configuring at block 702 of the network video surveillance camera to be in the intelligent power fail-safe mode further comprises recording video footage to an internal memory of the network video surveillance camera.

For example, one or more operating modes engaged by internal power system 100 can ensure that video recording data can be stored locally in memory of the network video surveillance camera (e.g., via communicative coupling between the camera components and the one or more memory/memories 110). This can ensure that even if external power is reduced or interrupted that surveillance data will not be lost. This can be beneficial in the case of a malicious event where a bad actor cuts the external power supply in an attempt to gain access to a secure location or area that the network video surveillance camera is being used to protect.

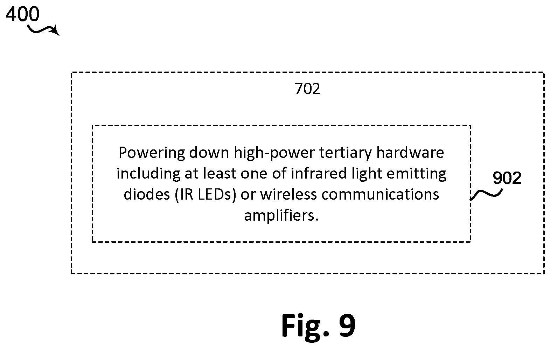

Referring to Fig. 9, in an alternative or additional aspect, at block 902, the configuring at block 702 of the network video surveillance camera to be in the intelligent power fail-safe mode further comprises powering down high-power tertiary hardware including at least one of infrared light emitting diodes (IR LEDs) or wireless communications amplifiers.

For example, according to one or more operating mode(s) that are engaged as the result of an external power interruption event, powering down high-power tertiary hardware can be important when the external power supply is interrupted for an extended period of time. Non-essential functions might otherwise cause powering component 325 to lose power at a rate that depletes power from powering component 325 before the external power supply is reconnected automatically or by a technician. Further, in the event of a maj or power outage event, tertiary hardware may be irrelevant or superfluous. For example, in the case of a major power outage, wireless transmission of data may be pointless if a receiver is connected to the same external power supply, albeit at a remote location, because the receiver would not be able to receive any surveillance data.

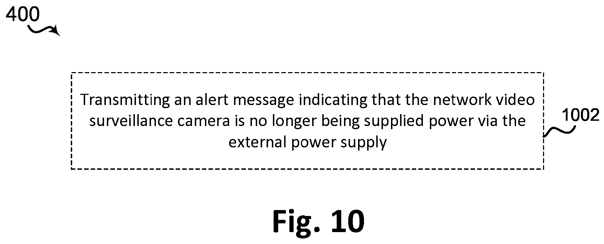

Referring to Fig. 10, in an alternative or additional aspect, at block 1002, the method 400 may further include transmitting an alert message indicating that the network video surveillance camera is no longer being supplied power via the external power supply. For example, in an aspect, internal power system 100, one or more processors 105, one or more memories 110, internal power management component 115, and/or transmitting component 340 may be configured to or may comprise means for transmitting an alert message indicating that the network video surveillance camera is no longer being supplied power via the external power supply.

For example, the transmitting at block 1002 may include transmitting one or more alerts, alarms, and/or notifications to a central management system, technician, surveillance manager, or other system or person in order to ensure that knowledge of the external power supply interruption event has occurred is directed to the appropriate system or person. This transmission can occur via transmitting component 340 based on one or more conditions based on one or more thresholds (e.g., interruption for a particular length of time or quantity of faults). In some aspects, transmitting component 340 can be a wireless transmitter or transceiver operable to transmit data such as an alert, alarm, or notification via a wireless network. In some aspects transmission of the alert, alarm, or notification can be repeated periodically or at other intervals in order to ensure a high likelihood that the alert, alarm, or notification is received and not missed.

Some further example aspects of the apparatuses and methods described herein are provided in the following clauses. Any of these embodiments can be claimed in a separate claim, e.g. by substituting the word "Clause" by "Claim", in particular in the order as mentioned below and/or in any combination with any embodiment described above or with any of the features of the attached claims:
Clause 1. A method for intelligent power fail-safe of a network video surveillance camera, comprising: detecting a loss in external power from an external power supply to the network video surveillance camera; and powering the network video surveillance camera with an internal power supply in response to detecting the loss in external power from the external power supply.
Clause 2. The method of clause 1, further comprising: detecting a power gain from the external power supply to the network video surveillance camera indicating a reconnection of the external power supply to the network video surveillance camera; and powering the network video surveillance camera with the external power supply in response to detecting the power gain from the external power supply.
Clause 3. The method of clause 1 or 2, further comprising charging the internal power supply via the external power supply.
Clause 4. The method of any of the above clauses, further comprising configuring the network video surveillance camera to be in an intelligent power fail-safe mode in response to powering the network video surveillance camera with the internal power supply.
Clause 5. The method of any of the above clauses, wherein configuring the network video surveillance camera to be in the intelligent power fail-safe mode further comprises reducing stream resolution and frames per second (FPS) of the network video surveillance camera.
Clause 6. The method of any of the above clauses, wherein configuring the network video surveillance camera to be in the intelligent power fail-safe mode further comprises recording video footage to an internal memory of the network video surveillance camera.
Clause 7. The method of any of the above clauses, wherein configuring the network video surveillance camera to be in the intelligent power fail-safe mode further comprises powering down high-power tertiary hardware including at least one of infrared light emitting diodes (IR LEDs) or wireless communications amplifiers.
Clause 8. The method of any of the above clauses, further comprising transmitting an alert message indicating that the network video surveillance camera is no longer being supplied power via the external power supply.
Clause 9. An apparatus for intelligent power fail-safe of a network video surveillance camera, comprising: one or more memories; and one or more processors coupled with one or more memories and configured, individually or in combination, to: either perform a method according to any of the above clauses or to detect a loss in external power from an external power supply to the network video surveillance camera; and power the network video surveillance camera with an internal power supply in response to detect the loss in external power from the external power supply.
Clause 10. The apparatus of clause 9, wherein the one or more processors are further configured to: detect a power gain from the external power supply to the network video surveillance camera indicating a reconnection of the external power supply to the network video surveillance camera; and power the network video surveillance camera with the external power supply in response to detect the power gain from the external power supply.
Clause 11. The apparatus of clause 9 or 10, wherein the one or more processors are further configured to charge the internal power supply via the external power supply.
Clause 12. The apparatus of any of clauses 9 to 11, wherein the one or more processors are further configured to configure the network video surveillance camera to be in an intelligent power fail-safe mode in response to power the network video surveillance camera with the internal power supply.
Clause 13. The apparatus of any of clauses 9 to 12, wherein to configure the network video surveillance camera to be in the intelligent power fail-safe mode the one or more processors are further configured to reduce stream resolution and frames per second (FPS) of the network video surveillance camera.
Clause 14. The apparatus of any of clauses 9 to 13, wherein to configure the network video surveillance camera to be in the intelligent power fail-safe mode the one or more processors are further configured to record video footage to an internal memory of the network video surveillance camera.
Clause 15. The apparatus of any of clauses 9 to 14, wherein to configure the network video surveillance camera to be in the intelligent power fail-safe mode the one or more processors are further configured to power down high-power tertiary hardware including at least one of infrared light emitting diodes (IR LEDs) or wireless communications amplifiers.
Clause 16. The apparatus of any of clauses 9 to 15, wherein the one or more processors are further configured to transmit an alert message indicating that the network video surveillance camera is no longer being supplied power via the external power supply.

Various aspects of the disclosure may take the form of an entirely or partially hardware aspect, an entirely or partially software aspect, or a combination of software and hardware. Furthermore, as described herein, various aspects of the disclosure (e.g., systems and methods) may take the form of a computer program product comprising a computer-readable non-transitory storage medium having processor accessible instructions (e.g., computer-readable and/or computer-executable instructions) such as computer software, encoded or otherwise embodied in such storage medium. Those instructions can be read or otherwise accessed and executed by one or more processors, individually or in combination, to perform or permit the performance of the operations described herein. The instructions can be provided in any suitable form, such as source code, compiled code, interpreted code, executable code, static code, dynamic code, assembler code, combinations of the foregoing, and the like. Any suitable computer readable non-transitory storage medium may be utilized to form the computer program product. For instance, the computer-readable medium may include any tangible non-transitory medium for storing information in a form readable or otherwise accessible by one or more computers or processor(s) functionally coupled thereto. Non-transitory storage media can include read-only memory (ROM); random access memory (RAM); magnetic disk storage media; optical storage media; flash memory, and so forth.

Aspects of this disclosure are described herein with reference to block diagrams and flowchart illustrations of processor-implemented methods, systems, devices, apparatuses, and computer program products. It can be understood that each block of the block diagrams and flowchart illustrations, and combinations of blocks in the block diagrams and flowchart illustrations, respectively, can be implemented by processor-accessible instructions. Such instructions may include, for example, computer program instructions (e.g., processor-readable and/or processor-executable instructions). The processor-accessible instructions may be built (e.g., linked and compiled) and retained in processor-executable form in one or multiple memory devices or one or many other processor-accessible non-transitory storage media. These computer program instructions also can be stored in a processor-readable memory, where in response to execution by one or more processors, individually or in combination, the computer program instructions can direct a computer, a computing device, or other programmable data processing apparatus to function in a particular manner, such that the instructions stored in the processor-readable memory produce an article of manufacture including processor-accessible instructions (e.g., processor-readable instructions and/or processor executable instructions) to implement the function specified in the flowchart blocks (individually or in a particular combination) or blocks in block diagrams (individually or in a particular combination). The computer program instructions can be loaded onto a computer, a computing device, or other programmable data processing apparatus to cause a series of operations to be performed on the computer or other programmable apparatus to produce a computer-implemented process. The series of operations may be performed in response to execution by one or more processor or other types of processing circuitry. Thus, such instructions that execute on the computer or other programmable apparatus provide operations for implementing the functions specified in the flowchart blocks (individually or in a particular combination) or blocks in block diagrams (individually or in a particular combination).

In some implementations, the processor-accessible instructions may be loaded or otherwise incorporated into a general purpose computer, a special purpose computer, or another programmable information processing apparatus to produce a particular machine, such that the operations or functions specified in flowchart blocks or other blocks presented in this disclosure can be implemented in response to execution at the computer or processing apparatus. More specifically, the loaded processor-accessible instructions may be accessed and executed by one or multiple processors, individually or in combination, or other types of processing circuitry. In response to execution, the loaded processor-accessible instructions provide the functionality described in connection with flowchart blocks (individually or in a particular combination) or blocks in block diagrams (individually or in a particular combination). Thus, such instructions which execute on a computer, a computing device, or other programmable data processing apparatus can create a means for implementing the functions specified in the flowchart blocks (individually or in a particular combination) or blocks in block diagrams (individually or in a particular combination).

As used in this disclosure, including the annexed drawings, in some aspects the terms "component," "module," "interface," "system," and the like are intended to refer to a computer-related entity or an entity related to an apparatus with one or more specific functionalities. The entity can be either hardware, a combination of hardware and software, software, or software in execution. One or more of such entities are also referred to as "functional elements." As an example, a component can be a process running on a processor, a processor, an object, an executable, a thread of execution, a program, and/or a computer. For example, both an application running on a server or network controller, and the server or network controller can be a component. One or more components can reside within a process and/or thread of execution and a component can be localized on one computer and/or distributed between two or more computers. Also, these components can execute from various computer readable media having various data structures stored thereon. The components can communicate via local and/or remote processes such as in accordance with a signal having one or more data packets (e.g., data from one component interacting with another component in a local system, distributed system, and/or across a network such as the Internet with other systems via the signal). As another example, a component can be an apparatus with specific functionality provided by mechanical parts operated by electric or electronic circuitry, which parts can be controlled or otherwise operated by program code executed by a processor. As yet another example, a component can be an apparatus that provides specific functionality through electronic components without mechanical parts, the electronic components can include a processor to execute program code that provides, at least partially, the functionality of the electronic components. As still another example, interface(s) can include I/O components or Application Programming Interface (API) components. While the foregoing examples are directed to aspects of a component, the exemplified aspects or features also apply to a system, module, and similar.

Unless otherwise expressly stated, it is in no way intended that any protocol, procedure, process, functionality or combination of functionalities, or method set forth herein be construed as requiring that its acts or steps be performed in a specific order. Accordingly, where a process or method claim does not actually recite an order to be followed by its acts or steps or it is not otherwise specifically recited in the claims or descriptions of the subject disclosure that he steps are to be limited to a specific order, it is in no way intended that an order be inferred, in any respect. This holds for any possible non-express basis for interpretation, including; matters of logic with respect to the arrangement of steps or operational flow; plain meaning derived from grammatical organization or punctuation; the number or type of aspects described in the specification or annexed drawings; or the like.

As used in this disclosure, including the annexed drawings, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Moreover, articles "a" and "an" as used in this specification and annexed drawings should be construed to mean "one or more" unless specified otherwise or clear from context to be directed to a singular form.

In addition, the terms "example" and "such as" are utilized herein to mean serving as an instance or illustration. Any aspect or design described herein as an "example" or referred to in connection with a "such as" clause is not necessarily to be construed as preferred or advantageous over other aspects or designs described herein. Rather, use of the terms "example" or "such as" is intended to present concepts in a concrete fashion. The terms "first," "second," "third," and so forth, as used in the claims and description, unless otherwise clear by context, is for clarity only and doesn't necessarily indicate or imply any order in time or space.

The term "processor," as utilized in this disclosure, refers to any computing processing unit or device comprising processing circuitry that can operate on data and/or signaling. A computing processing unit or device may include, for example, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor may include an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, or any combination thereof designed to perform the functions described herein. A processor may also be implemented as a combination of computing processing units.

In addition, terms such as "store," "data store," data storage," "database," and substantially any other information storage component relevant to operation and functionality of a component, refer to "memory components," or entities embodied in a "memory" or components comprising the memory. It will be appreciated that the memory components described herein can be either volatile memory or nonvolatile memory, or can include both volatile and nonvolatile memory. Moreover, a memory component can be removable or affixed to a functional element (e.g., device, server).

Simply as an illustration, nonvolatile memory can include read only memory (ROM), programmable ROM (PROM), electrically programmable ROM (EPROM), electrically erasable ROM (EEPROM), or flash memory. Volatile memory can include random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM). Additionally, the disclosed memory components of systems or methods herein are intended to comprise, without being limited to comprising, these and any other suitable types of memory.

Various aspects described herein can be implemented as a method, system, device, apparatus, or article of manufacture using standard programming and/or engineering techniques. In addition, various of the aspects disclosed herein also can be implemented by means of program modules or other types of computer program instructions stored in memory device and executed by a processor, or other combination of hardware and software, or hardware and firmware. Such program modules or computer program instructions can be loaded onto a general purpose computer, a special purpose computer, or another type of programmable data processing apparatus to produce a machine, such that the instructions which execute on the computer or other programmable data processing apparatus create a means for implementing the functionality of disclosed herein.

The term "article of manufacture" as used herein is intended to encompass a computer program accessible from any computer-readable device, carrier, or media. For example, computer readable media can include but are not limited to magnetic storage devices (e.g., hard drive disk, floppy disk, magnetic strips, or similar), optical discs (e.g., compact disc (CD), digital versatile disc (DVD), blu-ray disc (BD), or similar), smart cards, and flash memory devices (e.g., card, stick, key drive, or similar).

While the foregoing disclosure discusses illustrative aspects and/or embodiments, it should be noted that various changes and modifications could be made herein without departing from the scope of the described aspects and/or embodiments as defined by the appended claims. Furthermore, although elements of the described aspects and/or embodiments may be described or claimed in the singular, the plural is contemplated unless limitation to the singular is explicitly stated. Additionally, all or a portion of any aspect and/or embodiment may be utilized with all or a portion of any other aspect and/or embodiment, unless stated otherwise.

## Claims

1. A method for intelligent power fail-safe of a network video surveillance camera, comprising:
detecting a loss in external power from an external power supply to the network video surveillance camera; and
powering the network video surveillance camera with an internal power supply in response to detecting the loss in external power from the external power supply.

2. The method of claim 1, further comprising:
detecting a power gain from the external power supply to the network video surveillance camera indicating a reconnection of the external power supply to the network video surveillance camera; and
powering the network video surveillance camera with the external power supply in response to detecting the power gain from the external power supply.

3. The method of claim 1 or 2, further comprising charging the internal power supply via the external power supply.

4. The method of any of claims 1 to 3, further comprising configuring the network video surveillance camera to be in an intelligent power fail-safe mode in response to powering the network video surveillance camera with the internal power supply.

5. The method of claim 4, wherein configuring the network video surveillance camera to be in the intelligent power fail-safe mode further comprises reducing stream resolution and frames per second (FPS) of the network video surveillance camera; and/or
wherein configuring the network video surveillance camera to be in the intelligent power fail-safe mode further comprises recording video footage to an internal memory of the network video surveillance camera; and/or
wherein configuring the network video surveillance camera to be in the intelligent power fail-safe mode further comprises powering down high-power tertiary hardware including at least one of infrared light emitting diodes (IR LEDs) or wireless communications amplifiers.

6. The method of any of claims 1 to 5, further comprising transmitting an alert message indicating that the network video surveillance camera is no longer being supplied power via the external power supply.

7. An apparatus for intelligent power fail-safe of a network video surveillance camera, comprising:
one or more memories; and
one or more processors coupled with one or more memories and configured, individually or in combination, to either perform a method according to any of the claims 1 to 6 or
to detect a loss in external power from an external power supply to the network video surveillance camera; and
to power the network video surveillance camera with an internal power supply in response to detect the loss in external power from the external power supply.

8. The apparatus of claim 7, wherein the one or more processors are further configured to:
detect a power gain from the external power supply to the network video surveillance camera indicating a reconnection of the external power supply to the network video surveillance camera; and
power the network video surveillance camera with the external power supply in response to detect the power gain from the external power supply.

9. The apparatus of claim 7 or 8, wherein the one or more processors are further configured to charge the internal power supply via the external power supply.

10. The apparatus of any of claims 7 to 9, wherein the one or more processors are further configured to configure the network video surveillance camera to be in an intelligent power fail-safe mode in response to power the network video surveillance camera with the internal power supply.

11. The apparatus of claim 10, wherein to configure the network video surveillance camera to be in the intelligent power fail-safe mode the one or more processors are further configured to reduce stream resolution and frames per second (FPS) of the network video surveillance camera; and/or
wherein to configure the network video surveillance camera to be in the intelligent power fail-safe mode the one or more processors are further configured to record video footage to an internal memory of the network video surveillance camera; and/or
wherein to configure the network video surveillance camera to be in the intelligent power fail-safe mode the one or more processors are further configured to power down high-power tertiary hardware including at least one of infrared light emitting diodes (IR LEDs) or wireless communications amplifiers.

12. The apparatus of any of claims 7 to 11, wherein the one or more processors are further configured to transmit an alert message indicating that the network video surveillance camera is no longer being supplied power via the external power supply.
